# EUROPEAN PATENT SPECIFICATION

(11) **EP 3 113 441 B1**
(45) Date of publication and mention of the grant of the patent: **21.03.2018**
(21) Application number: 15382340.6
(22) Date of filing: 29.06.2015
(51) Int. Cl.: H04L 29/06

(54) **DYNAMIC QUALITY OF EXPERIENCE IMPROVEMENT IN MEDIA CONTENT STREAMING**
DYNAMISCHE VERBESSERUNG DER ERFAHRUNGSQUALITÄT BEIM STREAMING VON MEDIENINHALTEN
AMÉLIORATION DE LA QUALITÉ D'EXPÉRIENCE DYNAMIQUE DANS UN CONTENU MULTIMÉDIA EN CONTINU

(43) Date of publication of application: 04.01.2017
(73) Proprietor: Alcatel-Lucent España, 28050 Madrid (ES)
(72) Inventor: PEREZ GARCIA, Pablo, 28050 Madrid (ES); RUIZ ALONSO, Jaime, 28050 Madrid (ES); VILLEGAS NUÑEZ, Alvaro, 28050 Madrid (ES)
(74) Representative: Berthier, Karine

(56) References cited:
- WO-A1-2013/048484
- PABLO PEREZ ET AL: "Qualitative Monitoring of Video Quality of Experience", MULTIMEDIA (ISM), 2011 IEEE INTERNATIONAL SYMPOSIUM ON, IEEE, 5 December 2011 (2011-12-05), pages 470-475, XP032090772, DOI: 10.1109/ISM.2011.83 ISBN: 978-1-4577-2015-4
- J. GUTIERREZ; P. PEREZ; F. JAUREGUIZAR; J. CABRERA; N. GARCIA: "Validation of a novel approach to subjective quality evaluation of conventional and 3D broadcasted video services", FOURTH INT. WORKSHOP ON QUALITY OF MULTIMEDIA EXPERIENCE, QOMEX 2012, YARRA VALLEY, AUSTRALIA, 5 July 2012 (2012-07-05), pages 230-235, XP32220392,

## Description

### BACKGROUND OF THE INVENTION

### Technical field

The present invention relates to the quality improvement of media content streaming and more particularly specifically to a method and device for an improved quality of experience for end users which receive multimedia content (e.g., text, audio, video, software, etc., and any combination of them) using a streaming mechanism in communications networks.

### Description of related art

In general, media content streaming refers to a media service wherein an end user (or users) may receive (or simultaneously receive) through a communications network and playback content, usually media content (multimedia content) such as music, images, video, multimedia, audio or any other type of media content. The media content may be sourced by a server to the subscribers (end users) over a communications network.

In media contents distribution, including streaming, there is a limitation of resources, e.g. bandwidth for transmission, storage capacity...so several compression techniques for media content have been developed. One of the most used techniques for media content compression and more specifically for video content is MPEG-2 (and then sent in an MPEG Transport Stream), but of course other multimedia content compression technique can be used.

For the delivery of the media content, different streaming techniques have been developed. Hypertext Transfer Protocol (HTTP) adaptive streaming (known as HAS) is the generic term for various methods of adaptive streaming over HTTP, commonly used for delivering live or on demand multimedia content to users over communications networks (for example IP networks) wherein the HTTP protocol is used for the transport of content media data and where the bit rate is adapted to the network capacities. In HTTP adaptive streaming, a protocol set of HTTP/Transmission Control Protocol/IP (HTTP/TCP/IP) may be used for transport of media data that is encapsulated as files (also known as segments). Each segment containing a certain part of the media stream and, therefore, of the media content. Protocols based on HTTP adaptive streaming, e.g., HTTP Live Streaming (HLS), Smooth Streaming, HTTP Dynamic Streaming (HDS), Dynamic Adaptive Streaming over HTTP (DASH), etc., encode content in different bitrates and split it in relatively small segments (e.g. a few seconds long each), aligned. End devices (also called end users devices) request each segment through an independent HTTP GET.

The HAS protocol works as follows: a certain multimedia content is going to be streamed to an end device, the content is encoded at a specific bit rate as a concatenation of segments, each containing a few seconds of the stream, with the property that at the segment boundaries, that is, between the end of one segment (e.g the last byte) and the beginning of the next segment, the end device can switch from one variant to another without any visible effects on the screen or the audio. Each of these segments has its own URL (so it can be said that each segment is an independent file) and, therefore, it is accessible as an independent asset, so once it is present in an HTTP server it can be retrieved by a standard web client using pure HTTP mechanisms.

Usually, several different streams, each with a certain nominal quality (for example, each with a certain bit rate) for the same media content, are offered to the end user and the user selects between them the stream he wants to download.

The servers which supply the (live and/or on-demand) media service to the end user (origin servers) over a communications network, ingest media (for example, video) streams from different providers/sources (for example, digital television feeds) and make them available, or record them, for multimedia services as for example, IP video services (either IPTV or, more typically, Over-The-Top). Origin Servers will therefore provide the source video signal for a large number of subscribers (end users) along the network. As such, it is important for the Origin Server to be resilient against failures in the ingress video signal and to support redundancy at that level.

A prior art solution to mitigate these issues (resilience against failures and redundancy support) is sending the media (video) stream to the server in parallel through different paths (different sources), e.g. taking in the same video stream twice in two different Origin Server ingestion points. This way, if one of the paths fails, the ingestion from the other can take over and keep providing service. This solution has several drawbacks: On the one hand, the switchover period from one source to the other in the Origin Server may take some time, which would make it too late to use where the error is just a small quality glitch, because the error has already happened when the switch is performed (so not only the stream is delayed because of the switch, but the error is not avoided). On the other, it is relatively probable that both paths come from effectively the same video coded stream, so that the error may exist in both paths simultaneously. Moreover, if both paths don't come exactly from the same source, jumping from one source to the other will also create a discontinuity in the final stream. As a result, a packet loss (or equivalent small quality issue) in the source stream will result in a quality impairment in the final media content delivered to the user, so the Quality of Experience of the end user will be spoiled.

Existing Origin Servers integrated in video headend ecosystems support relatively simple redundancy models, where they ingest the same stream from different sources (or in different redundant entities), and they may switch from one to the other on failover situations. Their resiliency to errors in a single source is limited, and they have no resiliency to errors in both sources whatsoever. Moreover, when the switch is performed, the first error has already taken place so, the end user is going to be affected by some error even if there have been a switch from one source to another.

In other prior art solutions, the server records two different versions of the same stream in large segments (several minutes), and only stores the one with a higher quality, according to pure video QoS (Quality of Service) metrics. This has better resilience to single-source errors than the solution disclosed in the above paragraph, but it does not account for errors in both sources, either synchronized or even in different points of their large segments. Besides, their quality selection algorithm is applied when the whole segment has finished, which means that it takes place for network digital video recording services, but not for live (real time) services.

In both previously disclosed solutions, the Origin Server may have a source (which would provide a better quality of experience to the end user) that could be available to replace part of the impaired one, but their functional architecture make impossible to make said replacement effective and in an appropriated way (with improvement of the quality of experience of the user).

The embodiments of the invention proposed in the present specification below will overcome at least some of the mentioned drawbacks.

PABLO PEREZ ET AL: "Qualitative Monitoring of Video Quality of Experience", MULTIMEDIA (ISM), 2011 IEEE INTERNATIONAL SYMPOSIUM ON, IEEE, 5 December 2011, pages 470-475, XP032090772, evaluates the Quality of Experience degradations in IPTV networks due to packet loss. J. GUTIERREZ; P. PEREZ; F. JAUREGUIZAR; J. CABRERA; N. GARCIA: "Validation of a novel approach to subjective quality evaluation of conventional and 3D broadcasted video services", FOURTH INT. WORKSHOP ON QUALITY OF MULTIMEDIA EXPERIENCE, QOMEX 2012, YARRA VALLEY, AUSTRALIA, 5 July 2012, pages 230-235, XP032220392, discusses how transmission impairments influence the Quality of Experience of the user. WO 2013/048484 A1 (INTEL CORP [US]; OYMAN OZGUR [US]; LIN XINTIAN E [US]) 4 April 2013 describes systems and methods for Quality of Experience enhancements for multimedia streaming over wireless networks.

### SUMMARY

Prior art problems are generally solved or circumvented, and technical advantages are generally achieved, by the proposed embodiments which provide a method and a device (a server) for improving the end user's Quality of Experience in media content adaptive streaming by introducing a lightweight and customizable quality mechanism for media segments (e.g. video segments) into the recording chain. Any impaired (erroneous) segment will be replaced by any other one available, if the new one has a better quality score (which will depend on the Quality of Experience, QoE, of the end user) than the original. This will enhance the end-to-end perceived Quality of Experience (the quality perceived by an user of the end device playing by the media content) for a given network Quality of Service.

The proposed solution has, among others, the following advantages over the prior art:
- A QoE oriented quality model is used to decide where to replace a segment by a better one, based on the perceived impact of the change (and not only on pure network measurements).
- The proposed solution provides resiliency even when there is a single source, as it can take a lower bit-rate version of a segment if (and only if) it has a higher quality score than the original one.
- The solution provides resiliency even when the segments generated from both sources are not perfectly aligned in time, as it takes into account temporal misalignment in the quality model.
- The solution allows the Service Provider to calibrate its own QoE model, and therefore tune the Replacement Logic to the particularities of its service, without needing to modify the Quality Analyzer module.

According to a first aspect of the invention, a method is provided for improvement of media content streaming from a server to an end user's device through a communications network, where the server is adapted to receive more than one media stream for the same media content from at least one source and where each media stream is segmented, said method comprising the following steps:
a) Obtaining, for a plurality of segments of a plurality of received media streams, quality events which affect the Quality of Experience of the end user, and labelling the plurality of segments with the obtained quality events;
b) For at least one labelled segment of at least one of the received media streams, whose quality events are above a predefined error threshold (erroneous segment), the method comprising:
   b1) Selecting one segment of at least one media stream of the rest of media streams received for the same media content, as a candidate segment to replace the erroneous segment;
   b2) Assigning to the erroneous segment and to the candidate segments, a quality score; where the quality score assigned to a segment is based at least on the vector of quality events of the segment and the difference between the bit rate of the segment and the bit rate of the erroneous segment;
   b3) If there is any candidate segment with a quality score higher than the quality score of the erroneous segment, replacing, in the media stream to which the segment belongs to, the erroneous segment by the candidate segment with the highest quality score.

According to another aspect of the invention, it is provided a server for streaming of media content to an end user device through a communications network, and adapted to receive more than one media stream for the same media content from at least one source, and where each received media stream is segmented. Said server comprising:
- A quality analyzer for (configured to) obtaining, for a plurality of segments, quality events of the segment which affect the Quality of Experience of the end user and for labelling the plurality of segments with the obtained quality events;
- A replacement unit or module for (configured to):
   - Receiving the labelled segments and for at least one labelled segment of at least one of the received media streams, if the quality events of said at least one segment are above a predefined threshold, erroneous segment:
      - Selecting one labelled segment of at least one media stream of the rest of media streams received for the same media content, as a candidate segment to replace the erroneous segment;
      - Assigning for the erroneous segment and for the candidate segments, a quality score; where the quality score of a segment is based at least on the vector of quality events of the segment and the difference between the bit rate of the segment and the bit rate of the erroneous segment;
      - If there is any candidate segment with a quality score higher than the quality score of the erroneous segment, replacing the erroneous segment by the candidate segment with the highest quality score.

The quality analyzer may be further adapted to label the plurality of segments of the plurality of received media streams with a time stamp of the segment and the replacement unit is further adapted to assign the quality score of a segment depending also on the difference between the time stamp of the segment and the time stamp of the erroneous segment

In an embodiment, Hypertext Transfer Protocol, HTTP, adaptive streaming is used for the streaming of media content to the end user's device.

The quality events may be at least one of the following: video outage duration, video error duration, video error area, audio error duration and packet loss rate or any other type of event which affect the QoE perceived by the end user. And said quality events may be obtained from the analysis of the packet delay and/or packet losses of the segment or any other quality of service parameter of the segment.

The segment may be also labelled with the bit rate of the media stream to which the segment belongs.

The replacement unit may be further adapted to select the candidate segment from at least one media stream of the rest of media streams, as the segment whose time stamp is the same or most approximate to the time stamp of the erroneous segment.

In an embodiment, the server is further adapted to store the labelled segments and the replacement unit is further adapted to perform the replacement, when a media stream is going to be delivered to the user. In an alternative embodiment, the storage of received media streams in the server is performed after the replacing task performed by the replacement unit.

The replacement unit may be adapted to perform the selecting, assigning and replacing tasks for at least one segment whose quality events are above the predefined error threshold of: all the media streams received for the same media content; one media stream of each bit rate, received for the same media content; or one or more media streams received for the same media content, with a requested bit rate indicated by the end user.

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention a method, a device and a computer program according to the independent claims are provided. Favourable embodiments are defined in the dependent claims. These and other aspects of the invention will be apparent from and elucidated with reference to the embodiments described hereinafter.

### BRIEF DESCRIPTION OF THE DRAWINGS

Some embodiments of the method and device in accordance with embodiments of the present invention are now described, by way of example only, and with reference to the accompanying drawings, in which:
Figure 1 presents a schematic block diagram showing the functions of the elements Quality Analyzer (top part) and Replacement Logic (bottom part) in a specific example, according to an embodiment of the invention.
Figure 2 presents a schematic block diagram showing the function of the replacement logic in the example of figure 1, according to an embodiment of the invention.
Figure 3 presents a schematic block diagram showing two different embodiments of the invention depending on the replacement logic position in the server.

### DESCRIPTION OF EMBODIMENTS

The following embodiments propose methods and devices for streaming media content to an end user, improving the end user's Quality of Experience. In the proposed solution, the origin server (the server which supplies the media content to the user over a communications network) is able to replace an impaired segment by another one with better quality (that will provide a better quality of experience to the end user when the user plays said segment in the user's electronic device). The replacement will be done once the video has been segmented, so that it is guaranteed that the segments are cleanly replaceable by others without impacting the video decoder (specially, if a streaming mechanism with segmented media content is used, such as an HTTP Adaptive Streaming mechanism).

In an embodiment, the origin server (or origin servers if there are more than one) ingests the media stream (e.g. video) from one or more sources (for example, from one or more content providers or from the same content provider but using different paths to deliver the content to the server). These sources can be digital television feeds, video on demand service providers or any other type of providers which offer media content to an origin server. The Origin server makes this media content available for a large number of subscribers (end users) trough a communications network (for example, a mobile telecommunications network or any other type of communications network).

At least one media content stream, with a certain quality, is received and offered by the origin server to the end user. Usually, several different streams, each with a certain quality (for example, each with a certain bit rate) for the same media content, are offered to the end user, so the end user can select with stream he wants to download (depending on several factors, for example, the user's connection bandwidth, the type of media content, the storage capacity of the user's device...). This quality offered to the end user is usually called "nominal" quality or target quality, because it is usually the original quality of service but during the transmission, the stream can be damaged so the real quality of service can be less that this "nominal" quality which is offered to the end user. This offered quality, offered by the user in every stream, may be for example a bit rate, a error rate or any other type of quality of service.

The streamed media content is segmented, each segment containing a certain part of the media stream coded (at a specific bit rate). In an embodiment, a HTTP adaptive streaming mechanism, HAS, is used as the media content streaming mechanism to the end user.

The proposed solution comprises two main functional elements:
- Quality Analyzer. Every segment is analyzed and labelled with its quality events/parameters and optionally with its timestamp.
- Replacement Logic (also called replacement unit). When the quality score of a certain segment is below the target quality, a replacement segment with a higher quality score is searched and said certain segment is replaced by the replacement segment found. In an embodiment said replacement will be performed in the ingress side (before storage of the segment in the origin server). In an alternative embodiment will be performed in the egress side (when the segment is going to be delivered to the user).

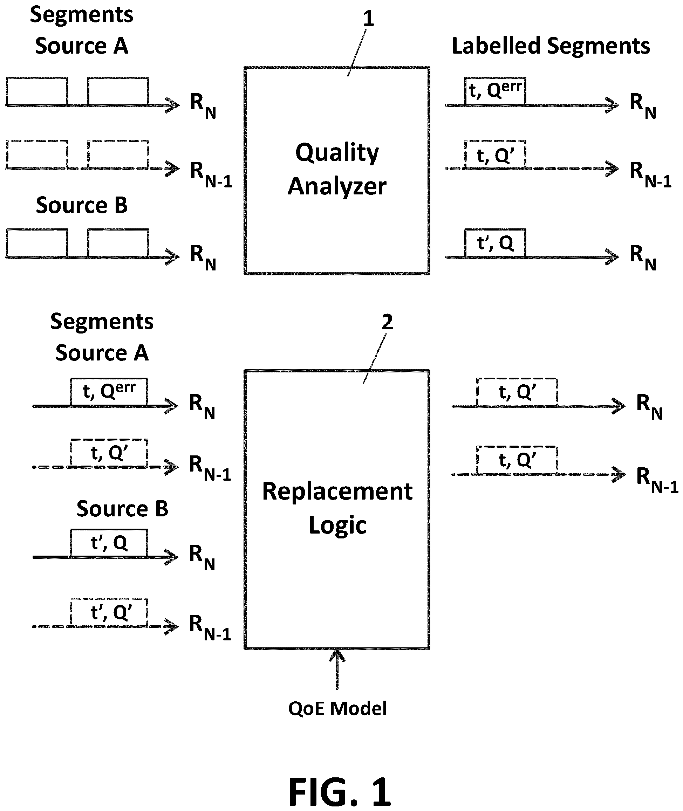

Figure 1 presents a schematic block diagram showing this two functional elements and how they work in a specific example.

As explained before, the origin server may ingest (receive) the same (Adaptive Streaming) content from several sources (in figure 1, two sources: A and B). Each source may provide N (N>=1) parallel representations (also called versions) of the same media stream (R₁ to R_{N}), which are perceptually equivalent among them (they include the same media content, for example, the same movie), but offer different quality (typically different bit rates). In other words, the server will receive in parallel from each source for the same media content, N streams, each one with a different bit rate (or generally speaking, each one with a different nominal quality of service). R₁ will be representation with lowest bit rate, and R_{N} is the representation with highest bit rate. It is not mandatory that all the sources provide the same number of representations (of different bit rates).

The media content is segmented (in a module usually called packager), each segment containing a certain part of the media stream. This segmentation uses to be performed in the origin server, but it can be performed externally to the origin server (so the origin server receives the media content already segmented).

### Quality Analyzer.

The Quality Analyzer (1) receives the segmented media content streams corresponding to the same media content and labels each segment with different information (t, Q). Figure 1 shows the labelling of two different representations (N and N-1), but it must be understood that all segments in all representations and all sources are labelled. In an embodiment, the Quality Analyzer labels the segment with the following information:
a) Time stamp (optional) which identifies the segment univocally (e.g. beginning and end of the segment). Time stamps can be obtained from the content coding or transport layer (e.g. in the case that MPEG-2 Transport Stream has been used to transport the media content, the time stamp may be the MPEG-2 TS Presentation Time Stamp, PTS, of the first and last Access Units of the segment).
   This time stamp is usually referred to the media content included in each segment. That is, if the media content is, for example, a movie and the time stamp of a first segment is t0-t1 and the time stamp of a second segment is t1-t2, it means that the first segment includes a piece of the movie which starts at time t0 and finishes at time t1 and the second segment includes a piece of the movie which starts at time t2 and finishes at time t3.
   Segments from the same source will have identical time stamps (by HTTP Adaptive Streaming design), whereas segment from different sources may have different ones. This is due to different reasons: e.g. that they may come from different processing paths, they may have been encoded by different encoders or packaged in HTTP Adaptive Streaming formats by different packagers, which might be not completely synchronized between them.
b) Quality Impairment vector (or simpler, quality vector): The quality of each segment is measured, taking into account its influence in the overall user's Quality of Experience, QoE, and each segment is labelled with an indication of said quality. In an embodiment, said quality measurement is a vector of events (or more generically speaking, of parameters or indicators) of each segment that affect Quality of Experience. These events may be obtained just from the analysis of Quality of Service elements of the received stream (packet delay, packet loss, bit rate or any other type of quality of service). For example, some of the events (called quality impairment events and/or quality events) taken into account by the Quality Analyzer may be one or several of the following list (this is only an example and other types of events/parameters which affect the Quality of Experience may be used):
   1. Video outage duration: duration of video freezing or black screens.
   2. Video error duration: duration of the impairment produced by packet losses or packet transmission errors.
   3. Video error area: fraction of the (media content) frame which is affected by packet losses or packet transmission errors.
   4. Audio error duration: total duration of audio losses or impairments.
   5. Packet loss rate: raw count of packet losses.

Of course, the use of these parameters will depend on the type of media content included in the segment, for example, the first three parameters of the above list can only be used if the segment includes video content and the fourth parameter can only be used if the segment includes audio content.

To obtain the video-related impairment parameters (the first three parameters of the above list), the proposed solution may use, for example, a technique of Packet Loss Effect Prediction (PLEP) metric (of course, this is only an example and other techniques may be used to obtain said parameters). This technique is shown for example in the document: "Effect of Packet Loss in Video Quality of Experience" Bell Labs Technical Journal, vol. 16, no. 1, pp. 91-104, Jun. 2011, by P. Perez, J. Macías, J.J. Ruiz, N. Garcia. The idea underlying this metric is that it is possible to predict the visual effect of a packet loss or transmission error in a digital video stream, just by partially decoding video headers and re-building the reference chain of each frame. This way it is possible to estimate the percentage of blocks (macroblocks) in each frame which are affected by the error, and therefore they cannot be correctly decoded, which typically results in a heavy visual distortion in the part of the image covered by such macroblocks. PLEP metric estimates, for each frame, the percentage of macroblocks affected by the error (E%). In an embodiment, a synthetic version of this metric may be used to calculate the events (parameters) included in the Quality Impairment vector:
1. Video outage duration, as the number of frames which have been completely lost (E% = 100%), multiplied by the frame rate. Frames completely lost result in a visual freezing of the previous image, or in a black screen (depending on the error concealment strategy of the video decoder).
2. Video error duration, as the number of frames with errors (0% < E% < 100%), multiplied by the frame rate.
3. Video error area, as the average area of the impairment (E%) during the "video error duration" period, i.e., in all the frames with 0% < E% < 100%.

Audio errors, unlike video, are simpler to manage. Their perceived effect is normally a silence or audio distortion (depending on the decoder implementation) of duration equal to the fraction of audio packets that have been lost (as disclosed for example in document, "Qualitative Monitoring of Video Quality of Experience" IEEE International Symposium on Multimedia, ISM 2011, Dana Point (CA), USA, pp. 470-475, 5-7 Dec. 2011, by P. Perez, J. Gutierrez, J.J. Ruiz, N. García, ). For example, if one second of audio is encoded in 10 audio packets, the loss of 4 packets approximately maps to a distortion of 400ms of audio (4/10 of one second). This way, the duration of the audio error included in the Quality Impairment Vector can be obtained from the packet loss rate.

Finally, the quality vector may include as well the bit rate of the segment (the bit rate of the representation which the segment belongs to). The bit rate is not really an impairment event as such, but it is an useful parameter to obtain the quality score of the segment (in the replacement unit), that's why is usually included in the vector

In the example of figure 1, the segments of the streams (representations) from source A will be labelled with the same time stamp "t" (because they correspond to the same media content) and the segment from source B will be labelled with a different time stamp "t''' (because it comes from a different source and the segments are not perfectly synchronized between the different sources).
From the point of view of quality, the segments have been labelled with different quality vectors. In this example, only the segment of the first stream has quality impairment events (Q^{err}) and the segments of the rest of representations and third streams have no quality impairment events, so the vectors of the second segment and third will only include its bit rate (Q' and Q respectively).

### Replacement Logic.

The labelled segments are received in the Replacement Logic functional unit (2) (or simpler, replacement unit or replacement logic). This unit takes each of the segments and replaces it, if needed, by a different one with higher quality score (that is, which will provide a higher quality of experience to the user, according to the QoE model used). There are basically three options:
- Leave the segment as it is (there is no replacement).
- Replace a segment by a segment of the same source, but from a lower bit rate.
- Replace a segment by a segment of a different source, either from the same or from a lower bit rate.

If the original segment has no errors (e.g. parameters 1-5 of the quality vector are zero), said segment will not be replaced, so the Replacement Logic does not treat said segment (the segment is bypassed by the Replacement Logic). However, if some of the error indicators is non-zero (in other words, it is considered an erroneous segment), the Replacement Logic acts (it is analyzed if said segment is replaced by a different one). In an embodiment, a certain threshold is defined and only if one (or more than one, or all, in another embodiments) of the impairment events is below or equal to a certain threshold (in the above case this threshold was 0), the segment is bypassed by the Replacement Logic; the value of this threshold is a design option and it will be selected depending on the scenario and/or the desired quality for the end user. For example, where the desired quality is very high, this threshold is very low (this way, almost all the erroneous segments will be replaced by a better segment, if any) and where the desired quality is not so high or the amount of errors in the segments is so high that it is not efficient to replace all the segments, this threshold will be higher.

The decision of whether to replace a segment by another or not and the decision about the segment to be used to replace the "erroneous segment" will depend on the Quality of Experience, QoE, model used by the server to make the decision. The QoE model will provide a QoE scoring for the erroneous segment (the segment to be replaced) but also for the segments of other streams of the same media content (received media streams for a certain content different to the media stream to which the erroneous segment belongs) which are candidates to replace the erroneous segment. These candidate segments usually will be the segments of other streams whose media content is the same (or most approximate as possible) to the media content of the erroneous segment or, in other words, the segment of other streams whose time stamp is the same or most approximated to the time stamp of the erroneous segment.

The example in Figure 1 shows the replacement logic for two representations (N and N-1) for the source A, where the segment of the N representation has some errors in the quality impairment vector (Q^{err} in the figure), while the segment N-1 representation (4) hasn't. As seen in the figure, the segment N has been replaced by the segment N-1 of the same source.

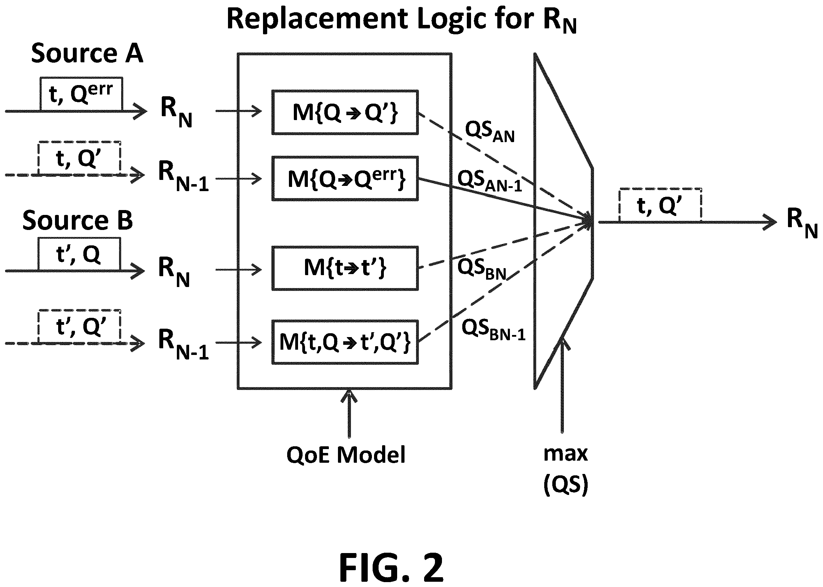

Figure 2 more detailed shows, the replacement logic for source A and representation N in the example of figure 1:

For providing the QoE score for each segment, in an embodiment, the QoE model takes into account the following parameters (factors):
- The quality impairment events of the segment or in other words, the impairment events of the segment, such as video or audio errors (e.g. packet losses) detected by the Quality Analyzer (Q^{err}).
- The bit rate of the segment. Usually, it is not taken the absolute bit rate but the difference between the bit rate of the segment being scored and the quality of the segment to be replaced (the erroneous segment).
- If the segment is labelled with time stamp information, temporal inconsistency (forwards/backwards jumps in time). That is, the difference between the time stamp of the segment being scored and the quality of the segment to be replaced.

The quality score will depend at least of said factors (for example, the QoE score can be the sum of the value of said factors, or the sum of the value of said factors weighted by a different weight depending on the factor or any other possible way of combining said factors)

If the segment being scored has only one of the above factors (the others are 0), the quality score will therefore only depend on said factor. For example, the score of the erroneous segment (QS_{AN}) will depend only on the quality vector of said segment because it has no temporal inconsistency or change in the bit rate. The score of the segment of the N-1th representation of source A (QS_{AN-1}) will depend only on the bit rate difference as it has no errors and no temporal inconsistency. And the score of the Nth representation of source B (QS_{BN}) will depend only in the temporal inconsistency as this segment has no errors and no difference in bit rate with the segment being replaced.

If the segment being scored (candidate segment) has more than one of the above factors (for example, it has temporal inconsistency and its bit rate is different to the bit rate of the erroneous segment), the quality score will be a combination of the correspondent two or three factors. This will be the case of the N-1th representation of source B (QS_{BN-1}).

Once all the segments are scored, the one with a highest quality score (higher than the quality score of the erroneous segment) will be used to replace the erroneous segment in the media stream to which the erroneous segment belongs to. Taking into account these factors, it can happen that a segment with lower target quality (bit rate), has a better score because it has less error events (e.g. packet losses) than a segment with higher bit rate. If there is no candidate segment with a quality score higher than the erroneous segment, the erroneous segment will not be replaced.

In the example, of figure 2, the segment of the second representation (R_{N-1} of source A) with time stamp t' and bit rate Q', has been used to replace the segment of the first stream. That is, in this case, a segment with packet losses has been replaced by a healthy segment (e.g. with no packet losses) of a lower quality of service (lower bit rate) because, according to the QoE model, it is going to result in better final quality of experience for the user.

In the example explained above, as the segment of the first representation (R_{N}) has been replaced by a segment of lower bit rate, the real bit rate of the stream delivered to the user will be tiny lower than the target/nominal bit rate of the representation, but on the other hand, the final quality of experience for the user could be better than receiving the original R_{N} stream (due to the errors in said original stream).

The media stream resulted from replacing the erroneous segments of the stream by candidate segments (if the quality score is higher) may be delivered (streamed) to the end user (if the end user requests a stream with the content and the nominal bit rate of said media stream).

In summary:
- The Quality Analyzer provides objective metrics of the different events that might impair the perceived quality of each segment.
- The Replacement Logic introduces a subjective QoE model which allows replacing an impairment segment by the best possible replacement option from a perceptual (QoE) point of view.

Of course, any QoE Model can be used here to obtain the Quality Score. An example would be a model with the following two steps (this is only an example, and any other QoE Model could be used):
- Obtain a Mean Opinion Score (MOS) for each of the following events:
   ∘ Video freezing
   ∘ Video error in a fraction of the frame
   ∘ Audio losses
   ∘ Switch to a lower bit rate
   ∘ Temporal jump forwards or backwards (t-t')
- If a segment has more than one of the above listed events, take the segment with events with lowest MOS.

Moreover, it has been shown in previous researches that the parameters (events) selected for the quality vector are a stable representation of the factors that impact the perceived multimedia quality (QoE) of the received stream.

One of the good points of this quality impairment detection and quality score architecture (QoE model) is that it is relatively simple to calibrate using subjective quality assessment tests to provide some reference values from different impairment events, and then interpolating for intermediate event values. For example, it can be calibrated using known methodology to do subjective assessment tests in segmented content (as for example, the one disclosed in "Validation of a novel approach to subjective quality evaluation of conventional and 3D broadcasted video services", Fourth Int. Workshop on Quality of Multimedia Experience, QoMEX 2012, Yarra Valley, Australia, pp. 230-235, 5-7 Jul. 2012 by J. Gutierrez, P. Perez, F. Jaureguizar, J. Cabrera, N. Garcia or "Subjective Study of Adaptive Streaming Strategies for 3DTV", IEEE Int. Conf. on Image Processing, ICIP 2012, Orlando (FL), USA, pp. 2265-2268, 30 Sep. - 3 Oct. 2012 by the same autors). Even each different content provider may have their own independent calibration parameters (as disclosed for example in document, "Qualitative Monitoring of Video Quality of Experience", IEEE International Symposium on Multimedia, ISM 2011, Dana Point (CA), USA, pp. 470-475, 5-7 Dec. 2011 by P. Perez, J. Gutierrez, J.J. Ruiz, N. Garcia).

This double process (of quality analysis and replacement) must be made in every stream offered by the origin sever to the user. Even the origin server may receive the same media content from different sources; not all these different streams are usually offered to the end user. What it is usually offered to the end user is the same media content but with different target qualities (for example, each with a certain bit rate). That is, for each available bit rate, a media content stream is offered to the end user, the end user will tell the server which bit rate he prefers and said stream will be send to the user. So the above disclosed double process (quality analysis and replacement) will be usually made for one stream for each available offered bit rate.
Even if not all the streams from different sources are directly offered to the user, the fact of receiving the same media content from different sources in the origin server, allows to have more candidate segments for replacing any erroneous segment, improving therefore, the final QoE perceived by the end user.

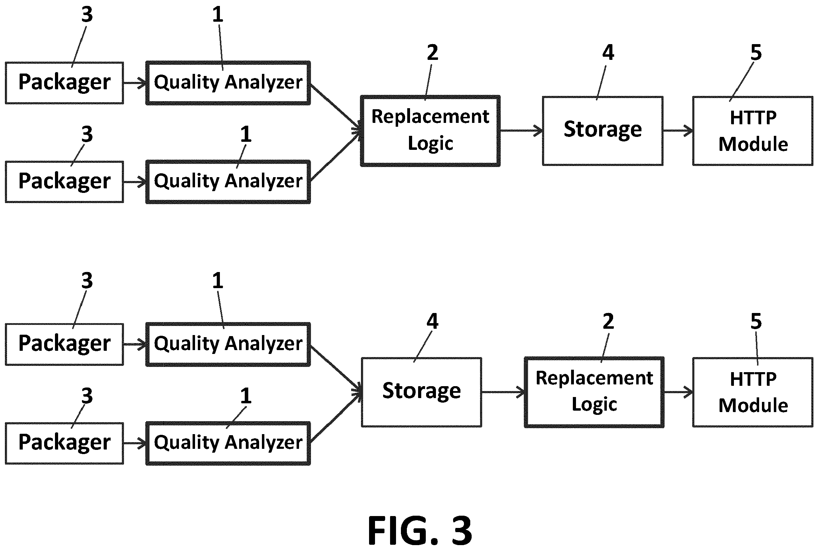

The proposed solution can be integrated in different parts of the internal architecture of the Origin Server. Figure 3 shows two different deployment options (embodiments) depending on when the replacement is made, before (top part) or after (bottom part) the storage.

In both embodiments, the segments (segmented by the packager (3) in the server, or external to the server); are analyzed (1) (labelling them with the quality and optionally with time stamp) before the storage (4) (when they are received). In the first embodiment, the replacement of the erroneous segments is made in the ingress side, so, the decision about the replacement (2) and the replacement (if any) of the erroneous segments is made at capture (or reception) time, that is, before the storage. So for each erroneous segment, only the segment with the best score is stored in the storage unit of the server. This means that, for each stream offered by the user (for each bit rate), only one segment (the one with the best quality score if the segment had errors) will be recorded in the disk. In other words, any media stream stored in the server is a media stream resulted from the replacement, with replaced segments, if any. When the segment must be streamed to the user, it is delivered without further decision (in case of using HTTP adaptive streaming, this delivery is performed by an HTTP module (5) or engine of the server, which delivers in HTTP format, the media content segment to the user) . This allows saving storage space and simplifying the delivery module, that doesn't need to take quality-decisions in real time.
In the second embodiment, the replacement (2) of the erroneous segments is made in the egress side, that is, the decision about the replacement and the replacement (if any) of the erroneous segments is made after the storage (4), in delivery time. So, all the segments from all the different sources and all the bit rates, are stored in the disk together with their labels (Quality vectors and time stamps), and the replacement logic is applied on delivery time. The storage and processing cost is higher than in the previous solution, but it provides more flexibility, as it is possible to change the QoE model after the content has been stored, or even to apply different QoE models for different requests (based on client type, for instance, if the service provider wants to have different models for smart phones and for large screen televisions). As in the previous embodiment, in case of using HTTP adaptive streaming, an HTTP module will be in charge of preparing and delivering the selected segment to the user.

There may be also a third embodiment where both previous embodiments are combined. Hence, in this third embodiment, there is a first replacement decision on capture time (before storage) and a second replacement decision and the replacement itself is made at delivery time (after storage). For example, on capture time, there is a selection between sources that is, for every segment which has to be replaced, there is a selection between the sources (for each bit rate, which segment of the different sources with said bit rate, has the best quality score). And on delivery time, knowing the bit rate wanted by the user, the replacement is made. That is, the stream with the target bit rate wanted by the user is taken; from said stream, if the segment has no error, then said segment is delivered and, if the segment has an error, then from all the segments with different bit rates stored, the segment with the best quality score is delivered. The QoE model used in the first decision (capture time) may be different to the QoE model used in the second decision (delivery time).

Summarizing, in the embodiments proposed, some of the problems found in the prior art media content streaming techniques are solved. In the solution proposed, the end user's Quality of Experience in media content adaptive streaming is improved by introducing quality analysis and replacement logic into the recording chain, so that any impaired segment will be replaced by other one available, if the new one has a better quality score than the original. This will enhance the end-to-end perceived Quality of Experience for a given network Quality of Service. Moreover, as the mechanism is applied at the same time the content is being received, in small segments of the media content (for example, HAS segments), this quality analysis and replacement maybe applied to real time (live) media content and not only for recorded media contents.
The concept of repairing content segments by use of lower quality ones in real-time Origin servers (e.g. video origin server), as proposed in the disclosed embodiments, has not been proposed or suggested any of the prior art solutions.

In most of the presented embodiment, an adaptive streaming mechanism, and more specifically, an HTTP adaptive streaming mechanism is used, but the embodiments are not limited to this mechanism and can be used with other type of streaming mechanisms.

In the presented embodiments, the terms media and multimedia are going to be used to refer to the same concept, that is, any type of content such as music, images, video, audio/video, data, audio or any combination of this contents that an user (an end user) can receive (e.g. from a server) and/or store and/or play in the user's electronic device (such as a laptop, tablet, PC, mobile phone, smart phone, set top box or any other type of electronic device which can receive streamed media content).

The presented embodiments may be embodied in other specific devices, systems and/or methods. The described embodiments are to be considered in all respects as only illustrative and not restrictive. In particular, the scope of the invention is defined by the appended claims rather than by the description and figures herein. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks titled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method executed at a server for improvement of media content streaming from the server to an end user's device through a communications network, where the server is adapted to receive more than one media stream for the same media content from at least one source, and where each media stream is segmented, said method comprising the following steps:
a) Obtaining, for a plurality of segments of a plurality of received media streams, quality events which affect the Quality of Experience of the end user, and labelling the plurality of segments with the obtained quality events;
b) For at least one labelled segment whose quality events are above a predefined error threshold, of at least one of the received media streams, called erroneous segment, the method comprising:
b1) Selecting one segment of at least one media stream of the rest of media streams received for the same media content, as a candidate segment to replace the erroneous segment;
b2) Assigning to the erroneous segment and to the candidate segments, a quality score, where the quality score assigned to a segment is based at least on the vector of quality events of the segment and the difference between the bit rate of the segment and the bit rate of the erroneous segment;
b3) If there is any candidate segment with a quality score higher than the quality score of the erroneous segment, replacing the erroneous segment by the candidate segment with the highest quality score.

2. A server for streaming media content to an end user device through a communications network, and adapted to receive more than one media stream for the same media content from at least one source, and where each received media stream is segmented, said server comprising:
- A quality analyzer (1) for obtaining, for a plurality of segments, quality events which affect the Quality of Experience of the end user and for labelling the plurality of segments with the obtained quality events;
- A replacement unit (2) for performing the following tasks:
- Receiving the labelled segments and for at least one labelled segment of at least one of the received media streams, if the quality events of the segment are above a predefined error threshold, called erroneous segment:
- Selecting one segment of at least one media stream of the rest of media streams received for the same media content, as a candidate segment to replace the erroneous segment;
- Assigning for the erroneous segment and for the candidate segments, a quality score; where the quality score of a segment is based at least on the vector of quality events of the segment and the difference between the bit rate of the segment and the bit rate of the erroneous segment;
- If there is any candidate segment with a quality score higher than the quality score of the erroneous segment, replacing in the media stream which the erroneous segment belong to, the erroneous segment by the candidate segment with the highest quality score.

3. The server according to claim 2 where the quality analyzer (1) is further adapted to label the plurality of segments with a time stamp of the segments and where the replacement unit (2) is further adapted to assign the quality score as dependent on the difference between the time stamp of the segment and the time stamp of the erroneous segment.

4. The server according to claim 3 where the replacement unit (2) is further adapted to select the candidate segment from at least one media stream of the rest of media streams as the segment of said media stream whose time stamp is the same or most approximate to the time stamp of the erroneous segment.

5. The server according to any of the previous claims 2-4 where Hypertext Transfer Protocol, HTTP, adaptive streaming is used for the streaming of media content to the end user's device.

6. The server according to any of the previous claims 2-5 where the quality events are at least one of the following: video outage duration, video error duration, video error area, audio error duration and packet loss rate.

7. The server according to any of the previous claims 2-6 where the quality analyzer (1) is further adapted to obtain said quality events from the analysis of the packet delay and/or packet losses of the segment.

8. The server according to any of the previous claims 2-6 where the quality analyzer (1) is further adapted to label the plurality of segments with the bit rate of the media stream to which the segment belongs.

9. The server according to any of the previous claims 2-8 further being adapted to store (4) the labelled segments and wherein the replacement unit (2) is further adapted to perform the replacing task, when a media stream is going to be delivered to the user.

10. The server according to any of previous claims 2-8 being adapted to store (4) said received media streams after the replacing task is performed by the replacement unit (2).

11. The server according to any of the previous claims 2 - 10 where the replacement unit (2) is adapted to perform the selecting, assigning and replacing tasks for at least one segment, whose quality events are above the predefined error threshold, of all the media streams received for the same media content.

12. The server according to any previous claims 2-10 where the replacement unit (2) is adapted to perform the selecting, assigning and replacing tasks for at least one segment, whose quality events are above the predefined error threshold, of one media stream received for the same media content of each bit rate.

13. The server according to any of previous claims 2-10 being adapted to receive a request indicating the bit rate requested by the user and wherein the replacement unit (2) is adapted to perform the selecting, assigning and replacing tasks for at least one segment, whose quality events are above the predefined threshold, of one or more media streams received for the same media content, with the requested bit rate.

14. A computer program comprising instructions causing a computer executing the program to perform all steps of a method according to claim 1.

15. A digital data storage medium storing the computer program of claim 14.

## Patentansprüche

1. Verfahren, ausgeführt an einem Server zum Verbessern des Medien-Content-Streaming von dem Server zu einem Endbenutzergerät durch ein Kommunikationsnetzwerk, wobei der Server ausgelegt ist zum Empfangen von mehr als einem Medien-Stream für denselben Medien-Content von mindestens einer Quelle, und wobei jeder Medien-Stream segmentiert ist, wobei besagtes Verfahren die folgenden Schritte umfasst:
a) Erhalten, für eine Vielzahl von Segmenten einer Vielzahl von empfangenen Medien-Streams, von Qualitätsereignissen, welche die Erfahrungsqualität des Endbenutzers beeinflussen, und Etikettieren der Vielzahl von Segmenten mit den erhaltenen Qualitätsereignissen;
b) Für mindestens ein etikettiertes Segment, dessen Qualitätsereignisse über einem vordefinierten Fehlerschwellenwert liegen, von mindestens einem der empfangenen Medien-Streams, genannt fehlerhaftes Segment, wobei das Verfahren umfasst:
b1) Auswählen eines Segments von mindestens einem Medien-Stream der restlichen Medien-Streams, die für denselben Medien-Content empfangen wurden, als ein Kandidaten-Segment zum Austauschen des fehlerhaften Segments;
b2) Zuweisen zum fehlerhaften Segment und zu den Kandidatensegmenten eines Qualitäts-Scores, wobei der einem Segment zugewiesene Qualitäts-Score basiert mindestens auf dem Vektor der Qualitätsereignisse des Segments und der Differenz zwischen der Bitrate des Segments und der Bitrate des fehlerhaften Segments;
b3) Wenn es ein Kandidaten-Segment mit einem Qualitäts-Score über dem Qualitäts-Score des fehlerhaften Segments gibt, Austauschen des fehlerhaften Segments durch das Kandidaten-Segment mit dem höchsten Qualitäts-Score.

2. Server zum Streaming von Medien-Content an ein Endbenutzergerät durch ein Kommunikationsnetzwerk, ausgelegt zum Empfangen von mehr als einem Medien-Stream für denselben Medieninhalt von mindestens einer Quelle, und wobei jeder empfangene Medien-Stream segmentiert ist, wobei besagter Server umfasst:
- einen Qualitätsanalysator (1) zum Erhalten, von einer Vielzahl von Segmenten, von Qualitätsereignissen, welche die Erfahrungsqualität des Endbenutzers beeinflussen und zum Etikettieren der Vielzahl von Segmenten mit den erhaltenen Qualitätsereignissen;
- eine Austauscheinheit (2) zum Durchführen der folgenden Aufgaben:
- Empfangen der etikettierten Segmente und für mindestens ein etikettiertes Segment von mindestens einem der empfangenen Medien-Streams, wenn die Qualitätsereignisse des Segments oberhalb eines vordefinierten Fehlerschwellenwerts, genannt fehlerhaftes Segment, liegen:
- Auswählen eines Segments von mindestens einem Medien-Stream der restlichen Medien-Streams, die für denselben Medien-Content empfangen wurden, als ein Kandidaten-Segment zum Austauschen des fehlerhaften Segments;
- Zuweisen für das fehlerhafte Segment und für die Kandidaten-Segmente eines Qualitäts-Scores; wobei der Qualitäts-Score eines Segments basiert mindestens auf dem Vektor der Qualitätsereignisse des Segments und der Differenz zwischen der Bitrate des Segments und der Bitrate des fehlerhaften Segments;
- Wenn es ein Kandidaten-Segment mit einem Qualitäts-Score über dem Qualitäts-Score des fehlerhaften Segments gibt, Austauschen in dem Medien-Stream, zu dem das fehlerhafte Segment gehört, des fehlerhaften Segments durch das Kandidaten-Segment mit dem höchsten Qualitäts-Score.

3. Server nach Anspruch 2, wobei der Qualitätsanalysator (1) weiterhin ausgelegt ist zum Etikettieren der Vielzahl von Segmenten mittels eines Zeitstempels der Segmente und wobei die Austauscheinheit (2) weiterhin ausgelegt ist zum Zuweisen des Qualitäts-Scores in Abhängigkeit der Differenz zwischen dem Zeitstempel des Segments und dem Zeitstempel des fehlerhaften Segments.

4. Server nach Anspruch 3, wobei die Austauscheinheit (2) weiterhin ausgelegt ist zum Auswählen des Kandidatensegments aus mindestens einem Medien-Stream der restlichen Medien-Streams als Segment besagten Medien-Streams, dessen Zeitstempel gleich oder am ähnlichsten dem Zeitstempel des fehlerhaften Segments ist.

5. Server nach einem beliebigen der Ansprüche 2-4, wobei das Hypertext Transfer Protocol, HTTP, adaptives Streaming verwendet wird für das Streaming von Medien-Content an das Endbenutzergerät.

6. Server nach einem beliebigen der vorhergehenden Ansprüche 2-5, wobei die Qualitätsereignisse mindestens eines aus den folgenden sind: Videoausfalldauer, Video-Fehlerdauer, Video-Fehlerbereich, Audio-Fehlerdauer und Paketverlustrate.

7. Server nach einem beliebigen der vorhergehenden Ansprüche 2-6, wobei der Qualitätsanalysator (1) weiterhin ausgelegt ist zum Erhalten besagter Qualitätsereignisse aus der Analyse der Paketverzögerung und/oder den Paketverlusten des Segments.

8. Server nach einem beliebigen der vorhergehenden Ansprüche 2-6, wobei der Qualitätsanalysator (1) weiterhin ausgelegt ist zum Etikettieren der Vielzahl von Segmenten mit der Bitrate des Medienstreams, zu dem das Segment gehört.

9. Server nach einem beliebigen der vorhergehenden Ansprüche 2-8, weiterhin ausgelegt zum Speichern (4) der etikettierten Segmente und wobei die Austauscheinheit (2) weiterhin ausgelegt ist zum Durchführen der Austauschaufgabe, wenn ein Medien-Stream an den Benutzer übermittelt werden soll.

10. Server nach einem beliebigen der vorhergehenden Ansprüche 2-8, ausgelegt zum Speichern (4) besagter empfangener Medien-Streams, nachdem die Austauschaufgabe von der Austauscheinheit (2) durchgeführt worden ist.

11. Server nach einem beliebigen der vorhergehenden Ansprüche 2-10, wobei die Austauscheinheit (2) ausgelegt ist zum Durchführen von Auswahl-, Zuweisungs- und Austauschaufgaben für mindestens ein Segment, dessen Qualitätsereignisse sich oberhalb des vordefinierten Fehlerschwellenwerts befinden, von allen Medien-Streams, die für denselben Medien-Content empfangen werden.

12. Server nach einem beliebigen der vorhergehenden Ansprüche 2-10, wobei die Austauscheinheit (2) ausgelegt ist zum Durchführen von Auswahl-, Zuweisungs- und Austauschaufgaben für mindestens ein Segment, dessen Qualitätsereignisse sich oberhalb des vordefinierten Fehlerschwellenwerts befinden, von einem Medien-Stream, der für denselben Medien-Content für jede Bitrate empfangen wird.

13. Server nach einem beliebigen der vorhergehenden Ansprüche 2-10, ausgelegt zum Empfangen einer Anforderung, die die Bitrate anzeigt, welche von dem Benutzer angefordert wird, und wobei die Austauscheinheit (2) ausgelegt ist zum Durchführen von Auswahl-, Zuweisungs- und Austauschaufgaben für mindestens ein Segment, dessen Qualitätsereignisse sich oberhalb des vordefinierten Schwellenwerts befinden, von einem oder mehreren Medien-Streams, die für denselben Medien-Content empfangen werden, mit der angeforderten Bitrate.

14. Computerprogramm, umfassend Anweisungen, die einen Computer veranlassen, das Programm auszuführen zum Durchführen aller Schritte des Verfahrens nach Anspruch 1.

15. Digitales Datenspeichermedium, welches das Computerprogramm nach Anspruch 14 speichert.

## Revendications

1. Procédé exécuté au niveau d'un serveur pour améliorer une diffusion en flux continu d'un contenu multimédia à partir du serveur vers un dispositif de l'utilisateur final par l'intermédiaire d'un réseau de communication, où le serveur est adapté pour recevoir plus d'un flux multimédia pour le même contenu multimédia à partir d'au moins une source, et où chaque flux multimédia est segmenté, ledit procédé comprenant les étapes suivantes :
a) obtenir, pour une pluralité de segments d'une pluralité de flux multimédia reçus, des évènements de qualité qui affectent la qualité d'expérience de l'utilisateur final, et étiqueter la pluralité de segments avec les évènements de qualité obtenus ;
b) pour au moins un segment étiqueté dont les évènements de qualité sont au-dessus d'un seuil d'erreur prédéfini, d'au moins un des flux multimédias reçus, appelé segment erroné, le procédé comprend les étapes suivantes :
b1) sélectionner un segment d'au moins un flux multimédia parmi le reste des flux multimédias reçus pour le même contenu multimédia, en tant que segment candidat pour remplacer le segment erroné ;
b2) attribuer au segment erroné et aux segments candidats, un score de qualité, où le score de qualité attribué à un segment est basé au moins sur le vecteur des évènements de qualité du segment et sur la différence entre le débit binaire du segment et le débit binaire du segment erroné ;
b3) s'il existe un segment candidat ayant un score de qualité supérieur au score de qualité du segment erroné, remplacer le segment erroné par le segment candidat ayant le score de qualité le plus élevé.

2. Serveur pour diffuser en flux continu un contenu multimédia vers un dispositif d'utilisateur final par l'intermédiaire d'un réseau de communication, et adapté pour recevoir plus d'un flux multimédia pour le même contenu multimédia à partir d'au moins une source, et où chaque flux multimédia reçu est segmenté, ledit serveur comprenant :
- un analyseur de qualité (1) pour obtenir, pour une pluralité de segments, des évènements de qualité qui affectent la qualité d'expérience de l'utilisateur final et pour étiqueter la pluralité de segments avec les évènements de qualité obtenus ;
- une unité de remplacement (2) pour exécuter les tâches suivantes :
- recevoir les segments étiquetés et pour au moins un segment étiqueté d'au moins un des flux multimédias reçus, si les évènements de qualité du segment sont au-dessus d'un seuil d'erreur prédéfini, appelé segment erroné :
- sélectionner un segment d'au moins un flux multimédia parmi le reste des flux multimédias reçus pour le même contenu multimédia, en tant que segment candidat pour remplacer le segment erroné ;
- attribuer au segment erroné et aux segments candidats, un score de qualité ; où le score de qualité d'un segment est basé au moins sur le vecteur des évènements de qualité du segment et sur la différence entre le débit binaire du segment et le débit binaire du segment erroné ;
- s'il existe un segment candidat ayant un score de qualité supérieur au score de qualité du segment erroné, remplacer, dans le flux multimédia auquel le segment erroné appartient, le segment erroné par le segment candidat ayant le score de qualité le plus élevé.

3. Serveur selon la revendication 2 dans lequel l'analyseur de qualité (1) est en outre adapté pour étiqueter la pluralité de segments avec une estampille temporelle des segments et dans lequel l'unité de remplacement (2) est en outre adaptée pour attribuer le score de qualité en fonction de la différence entre l'estampille temporelle du segment et l'estampille temporelle du segment erroné.

4. Serveur selon la revendication 3 dans lequel l'unité de remplacement (2) est en outre adaptée pour sélectionner le segment candidat à partir d'au moins un flux multimédia parmi le reste de flux multimédia en tant que segment dudit flux multimédia dont l'estampille temporelle est identique à l'estampille temporelle du segment erroné ou s'approche le plus de celle-ci.

5. Serveur selon l'une quelconque des revendications 2 à 4 précédentes dans lequel la diffusion en continu adaptative de protocole de transfert hypertexte, HTTP, est utilisée pour la diffusion en flux continu de contenu multimédia vers le dispositif de l'utilisateur final.

6. Serveur selon l'une quelconque des revendications 2 à 5 précédentes dans lequel les évènements de qualité sont au moins les suivants : durée d'interruption vidéo, durée d'erreur vidéo, zone d'erreur vidéo, durée d'erreur audio et taux de perte de paquets.

7. Serveur selon l'une quelconque des revendications 2 à 6 précédentes dans lequel l'analyseur de qualité (1) est en outre adapté pour obtenir lesdits évènements de qualité à partir de l'analyse du retard de paquets et/ou des pertes de paquets du segment.

8. Serveur selon l'une quelconque des revendications 2 à 6 précédentes dans lequel l'analyseur de qualité (1) est en outre adapté pour étiqueter la pluralité de segments avec le débit binaire du flux multimédia auquel le segment appartient.

9. Serveur selon l'une quelconque des revendications 2 à 8 précédentes étant en outre adapté pour stocker (4) les segments étiquetés et dans lequel l'unité de remplacement (2) est en outre adaptée pour exécuter la tâche de remplacement, lorsqu'un flux multimédia est sur le point d'être délivré à l'utilisateur.

10. Serveur selon l'une quelconque des revendications 2 à 8 précédentes étant adapté pour stocker (4) lesdits flux multimédias reçus une fois que la tâche de remplacement est exécutée par l'unité de remplacement (2).

11. Serveur selon l'une quelconque des revendications 2 à 10 précédentes dans lequel l'unité de remplacement (2) est adaptée pour exécuter les tâches de sélection, d'attribution et de remplacement pour au moins un segment, dont les évènements de qualité sont au-dessus du seuil d'erreur prédéfini, de tous les flux multimédias reçus pour le même contenu multimédia.

12. Serveur selon l'une quelconque des revendications 2 à 10 précédentes dans lequel l'unité de remplacement (2) est adaptée pour exécuter les tâches de sélection, d'attribution et de remplacement pour au moins un segment, dont les évènements de qualité sont au-dessus du seuil d'erreur prédéfini, d'un flux multimédia reçu pour le même contenu multimédia de chaque débit binaire.

13. Serveur selon l'une quelconque des revendications 2 à 10 précédentes adapté pour recevoir une demande indiquant le débit binaire demandé par l'utilisateur et dans lequel l'unité de remplacement (2) est adaptée pour exécuter les tâches de sélection, d'attribution et de remplacement pour au moins un segment, dont les évènements de qualité sont au-dessus du seuil prédéfini, d'un ou de plusieurs flux multimédias reçus pour le même contenu multimédia, avec le débit binaire demandé.

14. Programme informatique comprenant des instructions entraînant l'exécution par un ordinateur du programme pour effectuer toutes les étapes d'un procédé selon la revendication 1.

15. Support de stockage de données numériques stockant le programme informatique selon la revendication 14.
